# EUROPÄISCHE PATENTSCHRIFT

(11) **EP 1 003 809 B1**
(45) Veröffentlichungstag und Bekanntmachung des Hinweises auf die Patenterteilung: **22.06.2005**
(21) Anmeldenummer: 98943797.5
(22) Anmeldetag: 29.07.1998
(51) Int. Cl.: C08K 5/523, C08L 69/00

(54) **FLAMMWIDRIGE POLYCARBONAT-ABS-FORMMASSEN**
FLAME RESISTANT ABS POLYCARBONATE MOULDABLE MATERIALS
MATIERES MOULABLES DE POLYCARBONATE ABS RESISTANT A LA FLAMME

(30) Priorität: 11.08.1997 DE 19734659
(43) Veröffentlichungstag der Anmeldung: 31.05.2000
(73) Patentinhaber: Bayer MaterialScience AG, 51368 Leverkusen (DE)
(72) Erfinder: ECKEL, Thomas, D-41540 Dormagen (DE); WITTMAN, Dieter, D-51375 Leverkusen (DE); EICHENAUER, Herbert, D-41539 Dormagen (DE); ALBERTS, Heinrich, D-51519 Odenthal (DE)
(86) Internationale Anmeldenummer: PCT/EP1998/004735
(87) Internationale Veröffentlichungsnummer: WO 1999/007780

(56) Entgegenhaltungen:
- EP-A- 0 594 021
- EP-A- 0 640 655
- EP-A- 0 761 746

## Beschreibung

Die vorliegende Erfindung betrifft mit Phosphorverbindungen flammwidrig ausgerüstete Polycarbonat-ABS-Formmassen, die ein ausgezeichnetes mechanisches Eigenschaftsniveau, insbesondere eine deutlich verbesserte Reißfestigkeit und Streckspannung sowie einen herausragenden Zug-E-Modul aufweisen.

In EP-A-0 363 608 werden Polymermischungen aus aromatischem Polycarbonat, styrolhaltigem Copolymer oder Pfropfcopolymer sowie oligomeren Phosphaten als Flammschutzadditive beschrieben. Für bestimmte Einsatzzwecke ist das mechanische Eigenschaftsniveau dieser Mischungen oft nicht ausreichend.

In der EP-A-0 704 488 werden Formmassen aus aromatischem Polycarbonat, styrolhaltigen Copolymerisaten und Pfropfpolymerisaten mit einer speziellen Pfropfbasis in bestimmten Mengenverhältnissen beschrieben. Diese Formmassen weisen eine sehr gute Kerbschlagzähigkeit auf und können gegebenenfalls mit Phosphorverbindungen flammwidrig ausgerüstet werden. Für die Herstellung von Formkörpern mit erhöhter Elastizitatsbeanspruchung reicht das mechanische Eigenschaftsniveau nicht immer aus.

Aufgabe der vorliegenden Erfindung ist daher, flammwidrige Polycarbonat-ABS-Formmassen bereitzustellen, die eine ausgezeichnete Reißfestigkeit und einen ausgezeichneten Zug-E-Modul neben der erforderlichen hohen Flammwidrigkeit aufweisen.

Es wurde nun gefunden, daß PC/ABS-Formmassen, die Phosphorverbindungen gemäß Komponente D (s.u.) und Pfropfpolymerisat aus einer Pfropfgrundlage bestimmter Teilchengröße enthalten, zu Formkörper mit einem sehr guten mechanischen Eigenschaftsniveau, insbesondere auch unter erhöhter Elastizitatsbeanspruchung, verarbeitet werden können.

Gegenstand der vorliegenden Erfindung sind daher flammwidrige thermoplastische Formmassen enthaltend
- A.: 40 bis 99, vorzugsweise 60 bis 98,5 Gew.-Teile aromatisches Polycarbonat oder Polyestercarbonat
- B.: 0,5 bis 60, vorzugsweise 1 bis 40, insbesondere 2 bis 25 Gew.-Teile Pfropfpolymerisat von
- B. 1: 5 bis 95, vorzugsweise 30 bis 80 Gew.-% eines oder mehrerer Vinylmonomeren auf
- B.2: 95 bis 5, vorzugsweise 20 bis 70 Gew.% einer oder mehrerer Pfropfgrundlagen mit einer Glasumwandlungstemperatur < 0°C, vorzugsweise <-20°C und einer mittleren Teilchengröße (d₅₀-Wert) von 0,20 bis 0,35 µm, vorzugsweise 0,25 bis 0,30 µm
- C.: 0 bis 45, vorzugsweise 0 bis 30, besonders bevorzugt 2 bis 25 Gew.-Teile thermoplastisches Vinyl(co)polymerisat
- D.: 0,5 bis 20 Gew.-Teile, vorzugsweise 1 bis 18 Gew.-Teile, besonders bevorzugt 2 bis 15 Gew.-Teile, aus wenigstens einer Mono- und wenigstens einer Oligo-Phosphorverbindung der allgemeinen Formel (I) 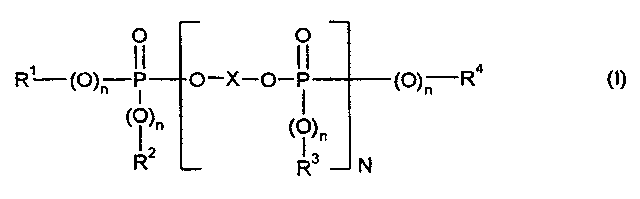 worin
R¹, R², R³ und R⁴, unabhängig voneinander jeweils gegebenenfalls halogeniertes C₁- bis C₈-Alkyl, jeweils gegebenenfalls durch Alkyl, vorzugsweise C₁-C₄-Alkyl, und/oder Halogen, vorzugsweise Chlor, Brom, substituiertes C₅- bis C₆-Cycloalkyl, C₆- bis C₂₀-Aryl oder C₇- bis C₁₂-Aralkyl,
n unabhängig voneinander, 0 oder 1
N 0 bis 30 und
X einen ein- oder mehrkernigen aromatischen Rest mit 6 bis 30 C-Atomen bedeuten,
- E.: 0,05 bis 5 Gew.-Teile, vorzugsweise 0,1 bis 1 Gew.-Teile, besonders bevorzugt 0,1 bis 0,5 Gew.-Teile fluoriertes Polyolefin,
wobei die Summe aller Gewichtsteile A+B+C+D+E 100 ergibt.

Besonders bevorzugte Formmassen sind solche, bei denen das Gewichtsverhältnis der Komponenten B:C zwischen 2:1 und 1:4, vorzugsweise zwischen 1:1 und 1:3 liegt.

In den erfindungsgemäßen Formmassen liegt die Komponente D vorzugsweise als eine Mischung von 10 bis 90 Gew.%, vorzugsweise 12 bis 40 Gew.%, wenigstens einer Monophosphorverbindung der Formel (I) und 10 bis 90 Gew.%, vorzugsweise 60 bis 88 Gew.%, jeweils bezogen auf die Gesamtmenge der Phosphorverbindungen, wenigstens einer Oligophosphorverbindung der Formel (I) vor, wobei die Mischung ein durchschnittliches N von 0,3 bis 20, vorzugsweise 0,5 bis 10, besonders bevorzugt 0,5 bis 6, aufweist.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarobonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II) 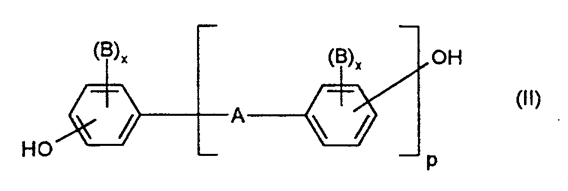 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 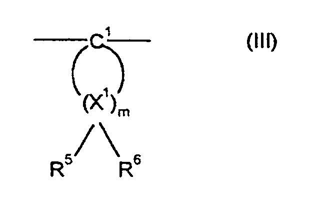 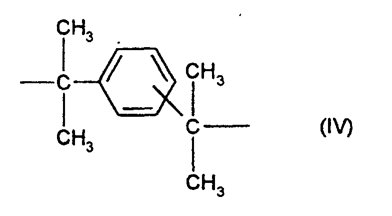
- B: jeweils Wasserstoff, C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁵ und R⁶ gleichzeitig Alkyl sind.

Bevorzugte Diphenole sind Hydrochinon, Resocin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A) können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyester-carbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaen wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polyestercarbonate liegt im Bereich 1,18 bis 1,4, vorzugsweise 1,22 bis 1,3 (gemessen an Lösungen von 0,5 g Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfaßt ein oder mehrere Pfropfcopolymerisate von
- B.1: 5 bis 95, vorzugsweise 30 bis 80 Gew.-% eines oder mehrerer Vinylmonomeren auf
- B.2: 5 bis 95, vorzugsweise 20 bis 70 Gew.-% einer oder mehrerer Pfropfgrundlagen mit Glasübergangstemperaturen < 0°C, vorzugsweise < -20°C, und mit einer mittleren Teilchengröße (d₅₀-Wert) von 0,20 bis 0,35 µm.

Monomere B.1 sind vorzugsweise Gemische aus
- B1.1: 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₄)-Alkylester (wie z.B. Methylmethacrylat, Ethylmethacrylat) und
- B 1.2: 1 bis 50 Gew.-TeiIen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B. geeignete Pfropfgrundlagen B.2 sind beispielsweise Dienkautschuke, EP(D)M-Kautschuke, also solche auf Basis Ethylen /Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb 0°C liegt.

Besonders bevorzugt ist reiner Polybutadienkautschuk.

Besonders bevorzugte Polymerisate B. sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen), der mittlere Teilchendurchmesser d₅₀ der Pfropfgrundlage B.2 0,20 bis 0,35 µm, vorzugsweise 0,25 bis 0,30µm.

Die Pfropfcopolymerisate B. werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind ABS-Polymerisate, die durch Redox-Initiierung mit einem Initiatorsystem aus organischem Hydroperoxid und Ascorbinsäure gemäß US-P 4 937 285 hergestellt werden.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfinonomere in Gegenwart der Pfropfgrundlage gewonnen werden und bei der Aufarbeitung mit anfallen.

### Komponente C

Die Komponente C umfaßt ein oder mehrere thermoplastische Vinyl (co)polymerisate.

Geeignet sind als (Co)Polymerisate C Polymerisate von mindestens einem Monomeren aus der Gruppe der Vinylaromaten, Vinylcyanide (ungesättigte Nitrile), (Meth)-Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- C.1: 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₄)-Alkylester wie z.B. Methylmethacrylat, Ethylmethacrylat), und
- C.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C sind harzartig, thermoplastisch und kautschukfrei.

Besonders bevorzugt ist das Copolymerisat aus C.1 Styrol und C.2 Acrylnitril.

Die (Co)Polymerisate gemäß C sind bekannt und lassen sich durch radikalische Polymerisation, insbesondere durch Emulsions-, Suspensions-, Lösungs- oder Massepolymerisation herstellen. Die (Co)Polymerisae gemäß Komponente C besitzen vorzugsweise Molekulargewichte M_{w} (Gewichtsmittel, ermittelt durch Lichtstreuung oder Sedimentation) zwischen 15 000 und 200 000.

(Co)Polymerisate gemäß Komponente C entstehen häufig bei der Pfropfpolymerisation der Komponente B als Nebenprodukte, besonders dann, wenn große Mengen Monomere B.1 auf kleine Mengen Kautschuk B.2 gepfropft werden. Die gegebenenfalls erfindungsgemäß auch einzusetzende Menge an C bezieht diese Nebenprodukte der Pfropfpolymerisation von B nicht ein.

Für bestimmte Einsatzzwecke sollte jedoch die Komponente C in den erfindungsgemäßen Formmassen vorliegen.

Liegt die Komponente C in den Formmassen vor, so sollte das Gewichtsverhältnis der Komponenten B:C zwischen 2:1 und 1:4, vorzugsweise zwischen 1:1 und 1:2, liegen, um für bestimmte Einsatzzwecke das gewünschte mechanische Werteniveau zu erreichen.

### Komponente D

Die Komponente D ist eine Mischung aus wenigstens einer Mono- und wenigstens einer Oligomeren-Phosphorverbindung der Formel (I)

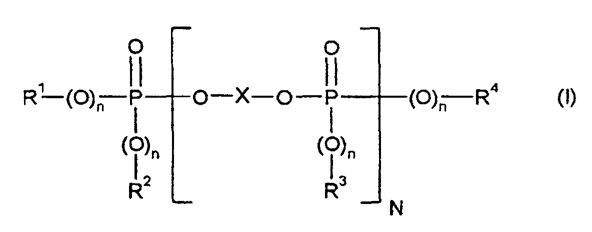

In der Formel haben R¹, R², R³ und R⁴, die oben angegebenen Bedeutungen. Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (I) bedeutet einen ein- oder mehrkernigen aromatischen Rest mit 6 bis 30 C-Atomen. Dieser leitet sich von Diphenolen der Formel (II) ab. Bevorzugte Diphenole sind z.B. Diphenylphenol, Bisphenol A, Resorcin oder Hydrochinon oder deren chlorierten oder bromierten Derivaten.
- n: in der Formel (I) kann, unabhängig voneinander, 0 oder 1 sein, vorzugsweise ist n gleich 1.
- N: steht für Werte von 0 bis 30, vorzugsweise für einen durchschnittlichen Wert von 0,3 bis 20, besonders bevorzugt 0,5 bis 10, insbesondere 0,5 bis 6.

Als erfindungsgemäße Komponente D werden Mischungen aus vorzugsweise 10 bis 90 Gew.-%, vorzugsweise 12 bis 40 Gew.-%, wenigstens einer Monophosphorverbindung der Formel (I) und wenigstens einer oligomeren Phosphorverbindung beziehungsweise eines Gemisches von Oligomeren Phosphorverbindungen in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (I) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Mischungen aus monomeren und oligomeren Phosphorverbindungen der Formel (I) weisen durchschnittliche N-Werte von 0,3 bis 20, bevorzugt 0,5 bis 10, insbesondere von 0,5 bis 6 auf.

Die Phosphorverbindungen gemäß Komponente D sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

### Komponente E

Die fluorierten Polyolefine E) sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E) eine Dichte von 1,2 bis 2,3 g/cm³. Bevorzugte fluorierte Polyolefine E) sind Polytetrafluorethylen, Polyvinylidenfluorid, Tetrafluorethylen(Hexafluorpropylen- und Ethylen/Tetrafluorethylen-Copolymerisate. Die fluorierten Polyolefin sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E) sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E) mit Emulsionen der Pfropfpolymerisate B) eingesetzt.

Geeignete, in Pulverform einsetzbare fluorierte Polyolefine E) sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B) und E) wird zuerst eine wäßrige Emulsion (Latex) eines Pfropfpolymerisates B) mit einer feinteiligen Emulsion eines Tetraethylenpolymerisates E) vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat E bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handlsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Anmtistatika, Stabilisatoren sowie Farbstoffe und Pigmente enthalten.

Die erfindungsgemäßen Formmassen können darüberhinaus noch feinstteilige, anorganische Pulver in einer Menge bis zu 50 Gew.-Teilen, vorzugsweise bis zu 20, insbesondere 0,5 bis 10 Gew.-Teilen, enthalten.

Feinstteilige anorganische Verbindungen bestehen aus Verbindungen eines oder mehrerer Metalle der 1. bis 5. Hauptgruppe oder 1. bis 8. Nebengruppe des Periodensystems, bevorzugt 2. bis 5. Hauptgruppe und 4. bis 8. Nebengruppe, besonders bevorzugt 3. bis 5. Hauptgruppe und 4. bis 8. Nebengruppe mit mindestens einem Element ausgewählt aus der Gruppe Sauerstoff, Schwefel, Bor, Phosphor, Kohlenstoff, Stickstoff, Wasserstoff und Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phospite oder Phosphonate.

Bevorzugte feinstteilige anorganischen Verbindungen sind beispielsweise TiN, TiO₂, SnO₂, WC, ZnO, Al₂O₃, AlO(OH), ZrO₂, Sb₂O₃, SiO₂, Eisenoxide, Na₂SO₄, BaSO₄, Vanadianoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Pfropfkautschuke mit Dispersionen, Suspensionen, Pasten oder Solen der feinstteiligen anorganischen Materialien dar.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat und Zinnoxid sowie Siloxanverbindungen genannt.

Die erfindungsgemäßen Formmassen enthaltend die Komponenten A) bis E) und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperatuern von 200°C bis 300°C in üblichen Aggregaten wie Innenknetern, Extrudern und Doppelwellenschnecken schmelzcompoundiert und schmelzextrudiert, wobei die Komponente E) vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammfestigkeit, ihrer sehr guten Verarbeitungseigenschaft und ihrer sehr guten Verarbeitungseigenschaft und ihrer sehr guten mechanischen Eigenschaften, insbesondere ihrer herausragenden Steifigkeit, zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, oder Abdeckplatten für den Bausektor und Teile für den Kfz-Sektor. Sie sind außerdem auf dem Gebiet der Elektrotechnik einsetzbar, weil sie sehr gute elektrische Eigenschafte haben.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Lineares Polycarbonat auf Basis Bisphenol A mit einer relativen Lösungsviskosität von 1,252, gemessen in CH₂Cl₂ als Lösungsmittel bei 25°C und einer Konzentration von 0,5 g/100 ml.

### Komponente B

Pfropfpolymerisat von 45 Gew.-Teilen eines Copolymerisats aus Styrol und Acrylnitril im Verhältnis von 72:28 auf 55 Gew.-Teile teilchenförmigen vernetzten Polybutadienkautschuk (mittlerer Teilchendurchmesser d₅₀ = 0,28 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D.1

Mischung aus m-Phenylen-bis(di-phenyl-phosphat) (Fyrolflex RDP der Firma Akzo) und Triphenylphosphat (TPP) im Gewichtsverhältnis 3:1.

### Komponente D.2

Triphenylphosphat (TPP) als Vergleich.

### Komponente E

Tetrafluorethylenpolymerisat als koagulierte Mischung aus einer SAN-Pfropfpolymerisat-Emulsion gemäß o.g. Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von d₅₀ = 0,28 µm.

### Herstellung von E

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm³.

Die Bestimmung des Zug E-Moduls erfolgt nach DIN 53 457/ISO 527.

Die Bestimmung der Streckspannung erfolgt nach ISO 527

Die Bestimmung der Reißfestigkeit (Zugversuch) erfolgt nach ISO 527/DN 53455

**Tabelle 1**

| Zusammensetzung und Eigenschaften der Polycarbonat-ABS-Formmassen | | |
|---|---|---|
| Beispiel | 1 (Vergleich) | 2 |
| Komponenten [Gew.-Teile] | | |
| A | 83,8 | 83,8 |
| B | 4,3 | 4,3 |
| C | 2,7 | 2,7 |
| D.1 | - | 6,8 |
| D.2 | 6,8 | - |
| E | 2,4 | 2,4 |

| Eigenschaften: | | |
|---|---|---|
| Vicat B [°C] | 107 | 110 |
| Reißfestigkeit [N/mm²] | 47,2 | 49,7 |
| Streckspannung [N/mm²] | 58,0 | 61,1 |
| Zug-E-Modul [N/mm²] | 2628 | 2651 |

## Patentansprüche

1. Thermoplastische flammwirdrige Formmassen enthaltend
A. 40 bis 99 Gew.-Teile thermoplastisches Polycarbonat oder Polyestercarbonat
B. 0,5 bis 60 Gew.-Teile Pfropfpolymerisat von
B.1 5 bis 95 Gew.-% eines oder mehrerer Vinylmonomeren auf
B.2 95 bis 5 Gew.-% einer oder mehrerer Pfropfgrundlagen mit Glasübergangstemperaturen < 0°C und eine mittlere Teilchengröße (d₅₀-Wert) von 0,20 bis 0,35 µm,
C. 0 bis 45 Gew.-Teile thermoplastisches Vinylcopolymerisat,
D. 0,5 bis 20 Gew.-Teile einer Mischung aus wenigstens einer Mono- und wenigstens einer Oligo-Phosphorverbindung der Formel (I) 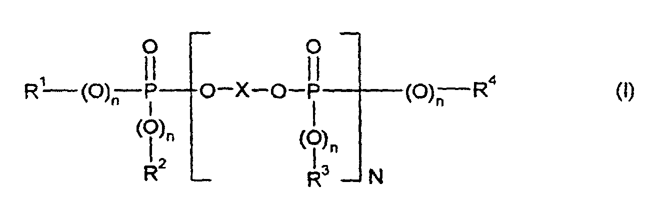 worin
R¹, R², R³ und R⁴, unabhängig voneinander jeweils gegebenenfalls halogeniertes C₁- bis C₈-Alkyl, jeweils gegebenenfalls durch Halogen und/oder Alkyl substituiertes C₅- bis C₆-Cycloalkyl, C₆- bis C₂₀-Aryl oder C₇- bis C₁₂-Aralkyl,
n unabhängig voneinander, 0 oder 1
N 0 bis 30 und
X einen ein- oder mehrkernigen aromatischen Rest mit 6 bis 30 C-Atomen bedeuten, und
E. 0,05 bis 5 Gew.-Teile fluoriertes Polyolefin.

2. Formmassen nach Anspruch 1, welche 1 bis 40 Gew.-Teile der Komponente B und 0 bis 30 Gew.-Teile der Komponente C enthalten.

3. Formmassen nach einem der Ansprüche 1 und 2, wobei mittlere Teilchenmesser d₅₀ der Komponente B 0,25 bis 0,30 µm beträgt.

4. Formmassen nach einem der vorhergehenden Ansprüche, wobei das Gewichtsverhältnis der Komponente B:C zwischen 2:1 und 1:4 beträgt.

5. Formmassen nach einem der vorhergehenden Ansprüche, welche 10 bis 90 Gew.-%, wenigstens einer Monophosphatverbindung der Formel (I) und 90 bis 10 Gew.-%, (jeweils bezogen auf die Gesamtmenge der Phosphorverbindungen) wenigstens einer Oligophosphorverbindung der Formel (I) enthalten.

6. Formmassen nach einem der vorhergehenden Ansprüche, wobei in Formel (I) N einen durchschnittlichen Wert von 0,3 bis 20 aufweist.

7. Formmassen nach einem der vorhergehenden Ansprüche welche als Monophosphorverbindung der Formel (I) Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und/oder Trikresylphosphinoxid enthalten.

8. Formmassen nach einem der vorhergehenden Ansprüchen welche bis zu 35 Gew.%, bezogen auf die Gesamtformmasse, wenigstens eines Flammschutzmittels verschieden von Komponente D enthalten.

9. Formmassen nach einem der vorhergehenden Ansprüche welche 1 bis 18 Gew.-Teile der Komponente D enthalten.

10. Formmassen nach einem der vorhergehenden Ansprüche wobei die Pfropfgrundlage B.2 ein Dienkautschuk, Acrylatkautschuk, Silikonkautschuk oder Ethylen-Propylen-Dien-Kautschuk ist.

11. Formmassen gemäß einem der vorhergehenden Ansprüche, enthaltend eine feinstteilige Verbindung der 1. bis 5. Hauptgruppe oder der 1. bis 8. Nebengruppe des Periodensystems mit mindestens einem Element ausgewählt aus der Gruppe bestehend aus Sauerstoff, Schwefel, Bor, Kohlenstoff, Phosphor, Stickstoff, Wasserstoff und Silicium.

12. Formmassen nach einem der vohergehenden Ansprüche welche mindestens einen Zusatz aus der Gruppe der Stabilisatoren, Pigmente, Entformungsmittel, Fließhilfsmittel und/oder Antistatika enthalten.

13. Verwendung der Formmassen nach einem der vorhergehenden Ansprüche zur Herstellung von Formkörpern.

14. Formkörper, hergestellt aus Formmassen nach einem der vorhergehenden Ansprüche.

## Claims

1. Thermoplastic, flame-retardant moulding compositions, containing
A. 40 to 99 parts by weight of a thermoplastic polycarbonate or polyester carbonate,
B. 0.5 to 60 parts by weight of a graft polymer
B.1 5 to 95 % by weight of one or more vinyl monomers
B.2 95 to 5 % by weight of one or more graft bases with glass transition temperatures < 0 °C and an average particle size (d₅₀ value) of 0.20 to 0.35 µm,
C. 0 to 45 parts by weight of a thermoplastic vinyl copolymer
D. 0.5 to 20 parts by weight of a mixture of at least one mono- and at least one oligo-phosphorus compound of general formula (I) 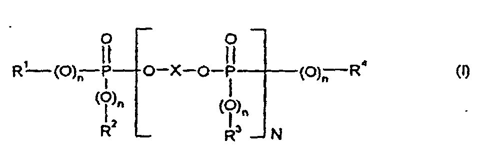 wherein
R¹ , R² , R³ and R⁴, independently of each other, each denote a C₁ to C₈ alkyl which is optionally halogenated, a C₅ to C₆ cycloalkyl, C₆ to C₂₀ aryl or C₇ to C₁₂ aralkyl, which are each optionally substituted by a halogen and/or an alkyl,
n denotes 0 or 1, which are independent of each other,
N denotes 0 to 30, and
X denotes a mono- or polynuclear aromatic radical containing 6 to 30 C atoms, and
E denotes 0.05 to 5 parts by weight of a fluorinated polyolefin.

2. Moulding compositions according to claim 1, which contain 1 to 40 parts by weight of component B and 0 to 30 parts by weight of component C.

3. Moulding compositions according to either one of claims 1 or 2, wherein the average particle size d₅₀ of component B is 0.25 to 0.30 µm.

4. Moulding compositions according to any one of the preceding claims, wherein the ratio by weight of components B:C is between 2:1 and 1:4.

5. Moulding compositions according to any one of the preceding claims, which contain 10 to 90 % by weight of at least one monophosphate compound of formula (I) and 90 to 10 % by weight (with respect to the total amount of phosphorus compounds in each case) of at least one oligophosphorus compound of formula (I).

6. Moulding compositions according to any one of the preceding claims, wherein N in formula (I) has an average value of 0.3 to 2.0.

7. Moulding compositions according to any one of the preceding claims, which contain, as the monophosphorus compound of formula (I), tributyl phosphate, tris-(2-chloroethyl) phosphate, tris-(2,3-dibromopropyl) phosphate, triphenyl phosphate, tricresyl phosphate, diphenyl cresyl phosphate, diphenyl octyl phosphate, diphenyl-2-ethyl-cresyl phosphate, tri-(isopropylphenyl) phosphate, halogen-substituted aryl phosphates, methylphosphonic acid dimethyl ester, methylphosphonic acid diphenyl ester, phenylphosphonic acid diethyl ester, triphenylphosphine oxide and/or tricresylphosphine oxide.

8. Moulding compositions according to any one of the preceding claims, which contain up to 35% by weight, with respect to the total moulding composition, of at least one flame retardant which is different from component D.

9. Moulding compositions according to any one of the preceding claims, which contain 1 to 18 parts by weight of component D.

10. Moulding compositions according to any one of the preceding claims, wherein graft base B.2 is a diene rubber, an acrylate rubber, a silicone rubber or an ethylene-propylene diene rubber.

11. Moulding compositions according to any one of the preceding claims, containing a very finely divided compound from main groups 1 to 5 or from subgroups 1 to 8 of the periodic table of the elements, in combination with at least one element selected from the group consisting of oxygen, sulphur, boron, carbon, phosphorus, nitrogen, hydrogen and silicon.

12. Moulding compositions according to any one of the preceding claims, which contain at least one additive from the group comprising stabilisers, pigments, demoulding agents, flow enhancers and/or anti-static agents.

13. Use of the moulding compositions according to any one of the preceding claims for the production of mouldings.

14. Mouldings produced from moulding compositions according to any one of the preceding claims.

## Revendications

1. Compositions à mouler thermoplastiques ignifugées contenant
A. 40 à 99 parties en masse d'un polycarbonate ou polyester-carbonate thermoplastique
B. 0,5 à 60 % en masse d'un polymère greffé par
B.1 5 à 95 % en masse d'un ou plusieurs monomères vinyliques sur
B.2 95 à 5 % en masse d'une ou plusieurs bases de greffage ayant des températures de transition vitreuse < 0°C et une taille de particules moyenne (valeur de d₅₀) de 0,20 à 0,35 µm,
C. 0 à 45 parties en masse d'un copolymère vinylique thermoplastique,
D. 0,5 à 20 parties en masse d'un mélange d'au moins un composé monophosphoré de formule (I) et d'au moins un composé oligophosphoré de formule (I) 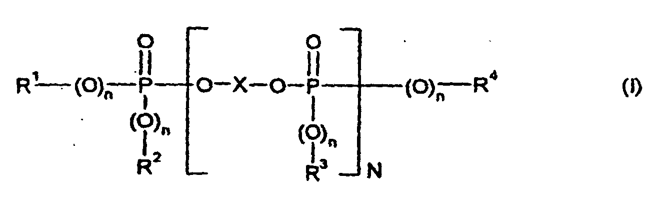 dans laquelle
R¹, R², R³ et R⁴, indépendamment les uns des autres, représentent chacun un groupe alkyle en C₁-C₈ éventuellement halogéné, un groupe cycloalkyle en C₅-C₆, aryle en C₆-C₂₀ ou aralkyle en C₇-C₁₂ éventuellement substitué par halogène et/ou alkyle,
les n sont, indépendamment les uns des autres, 0 ou 1,
N est 0 à 30, et
X représente un reste aromatique mono- ou polycyclique de 6 à 30 atomes de carbone, et
E. 0,05 à 5 parties en masse d'une polyoléfine fluorée.

2. Compositions à mouler selon la revendication 1, qui contiennent 1 à 40 parties en masse du constituant B et 0 à 30 parties en masse du constituant C.

3. Compositions à mouler selon l'une des revendications 1 et 2, dans lesquelles le diamètre moyen des particules d₅₀ du constituant B est de 0,25 à 0,30 µm.

4. Compositions à mouler selon l'une des revendications précédentes, dans lesquelles le rapport en masse des constituants B:C est compris entre 2:1 et 1:4.

5. Compositions à mouler selon l'une des revendications précédentes, qui contiennent 10 à 90 % en masse d'au moins un composé monophosphate de formule (I) et 90 à 10 % en masse (toujours par rapport à la masse totale des composés phosphorés) d'au moins un composé oligophosphoré de formule (I).

6. Compositions à mouler selon l'une des revendications précédentes, dans lesquelles, dans la formule (I), N a une valeur moyenne de 0,3 à 20.

7. Compositions à mouler selon l'une des revendications précédentes, qui contiennent comme composé monophosphoré de formule (I) du phosphate de tributyle, du phosphate de tris(2-chloroéthyle), du phosphate de tris(2,3-dibromopropyle), du phosphate de triphényle, du phosphate de tricrésyle, du phosphate de diphénylcrésyle, du phosphate de diphényloctyle, du phosphate de diphényl-2-éthylcrésyle, du phosphate de tri(isopropylphényle), des phosphates d'aryle halogénés, du méthylphosphonate de diméthyle, du méthylphosphonate de diphényle, du phénylphosphonate de diéthyle, de l'oxyde de triphénylphosphine et/ou de l'oxyde de tricrésylphosphine.

8. Compositions à mouler selon l'une des revendications précédentes, qui contiennent jusqu'à 35 % en masse, par rapport à la composition à mouler totale, d'au moins un agent ignifuge différent du constituant D.

9. Compositions à mouler selon l'une des revendications précédentes, qui contiennent 1 à 18 parties en masse du constituant D.

10. Compositions à mouler selon l'une des revendications précédentes, dans lesquelles la base de greffage B.2 est un caoutchouc diène, un caoutchouc acrylate, un caoutchouc silicone ou un caoutchouc éthylène-propylène-diène.

11. Compositions à mouler selon l'une des revendications précédentes, contenant un composé finement divisé du 1er au 5ème groupe principal ou du 1er au 8ème groupe secondaire du système périodique avec au moins un élément choisi dans le groupe constitué par l'oxygène, le soufre, le bore, le carbone, le phosphore, l'azote, l'hydrogène et le silicium.

12. Compositions à mouler selon l'une des revendications précédentes, qui contiennent au moins un additif du groupe des stabilisants, des pigments, des agents de démoulage, des auxiliaires d'écoulement et/ou des antistatiques.

13. Utilisation des compositions à mouler selon l'une des revendications précédentes pour la préparation de corps moulés.

14. Corps moulés préparés à partir de compositions à mouler selon l'une des revendications précédentes.
